# EUROPEAN PATENT APPLICATION

(11) **EP 2 937 268 A1**
(43) Date of publication of application: **28.10.2015**
(21) Application number: 15165059.5
(22) Date of filing: 24.04.2015
(51) Int. Cl.: B62H 3/02, B62H 3/08

(54) **A RACK FOR PUSH SCOOTERS**

(30) Priority: 25.04.2014 DK 201470242
(71) Applicant: Dansk Stalplade Teknik A/S, 4000 Roskilde (DK)
(72) Inventor: Raunkiær, Niels, 4000 Roskilde (DK); Stolberg, Lars Nicolai, 4000 Roskilde (DK)
(74) Representative: Holme Patent A/S

(57) **Abstract**

A rack (1) serves for releasable retaining at least one push scooter (2) of that kind which comprises a longitudinal footboard (3) disposed between at least one front wheel (4) and at least one rear wheel (5), an upright head tube (10) connected with the footboard (3), and a steering tube (8) pivotally mounted in the head tube (10) and equipped with a handle rod (14) at the top and with the front wheel (4) at the bottom. The rack (1) comprises a row of upper and lower retainers (21,22), whereby each of the upper retainers (21) is adapted to retain an upper part of the at least one scooter (2) and each of the lower retainers (22) is adapted to simultaneously retaining a lower part of said scooter (2). The rack of the invention can in an easy and secure way releasable retain a number of push scooters used in public institutions like e.g. kindergartens and hospitals.

## Description

The invention relates too a rack for releasable retaining at least one push scooter of that kind which comprises a longitudinal footboard disposed between at least one front wheel and at least one rear wheel, an upright head tube connected with the footboard and a steering tube pivotally mounted in the head tube and equipped with a handle rod at the top and with the front wheel at the bottom.

A push scooter, which is also called a kick scooter, is a foot-operated vehicle propelled by a rider pushing off the ground by one leg while standing upon the footboard with the other leg.

A push scooter is a popular toy for kids but is used also by adults to get around. A family with children can normally be in possession of a few scooters only while public institutions like e.g. kindergartens and hospitals often are utilizing many scooters.

In such institutions orderliness usually is a requirement. A rider of a scooter therefore is obliged to set the scooter at a predetermined parking place after use.

For avoiding that the scooters thereby are put down on the floor or are rested against a wall, there is a demand for means on said parking place for keeping the scooters in safe and stable positions when being parked.

To comply with this demand it is the object of the present invention to provide a rack of the kind mentioned in the opening paragraph for being placed on the parking place for the scooters, whereby the rack is comprising a row of upper and lower retainers and each of the upper retainers is adapted to releasable retaining an upper part of the at least one scooter and each of the lower retainers is adapted to simultaneously releasable retaining a lower part of said scooter.

This rack of the invention can advantageously keep a number of parked scooters in safe and stable positions in which they effectively are secured against overturning since both an upper and lower part of each scooter is retained of the rack.

According to the invention can each of the upper retainers be adapted to retain a part of the steering assembly such as the head tube or the steering tube or the handle rod of the at least one scooter and each of the lower retainers can furthermore be adapted to retain the front wheel of said scooter whereby a narrow construction of the rack is obtained since only the front part of the scooters needs to be retained of the rack.

In a preferred embodiment according to the invention can the rack be formed as a longitudinal frame made of sheets comprising a top sheet and a lower sheet. Thereby is achieved a strong and at the same time inexpensive construction of the rack.

According to the invention can the upper sheet of the frame be used as an upper retainer sheet formed with a row of the upper retainers and the lower sheet of the frame be used as a lower retainer sheet formed with a row of the lower retainers whereby the retainers easily and inexpensive can be produced.

For securing a proper upright position of a scooter retained of the rack can the row of upper retainers according to the invention be placed vertically above the row of lower retainers.

The distance between the middle of each of two neighboring retainers in a row of retainers can according to the invention be the same as or be larger than the width of the footboard of a scooter for thereby securing that there is space enough for retaining all the scooters in the rack.

In an expedient embodiment of the invention can the retainers according to the invention be formed as slots in the upper retainer sheet and as openings in the lower retainer sheet whereby the retainers in an inexpensive way simply can be stamped out of the respective sheets.

According to the invention can the retainer openings in the lower retainer sheet has such a size that a circle segment of the front wheel can fit into the opening so that the front wheel effectively can be retained in the retainer opening and it also is not necessary to retain the entire front wheel.

For making space enough underneath the lower retainer sheet to allow the segment of the front wheel to enter the retainer opening can the rear side and/or the front side of the lower retainer sheet according to the invention be formed with a vertically oriented flap with a width about the same size as the distance between the chord of said segment and the periphery of the front wheel.

According to the invention can each of the lower retainer openings be oriented in such way that the axis of the front wheel of the at least one scooter forms an angle of with the longitudinal direction of the frame of the rack when the front wheel is retained in the retainer opening, whereby advantageously is obtained that a scooter retained in the rack cannot run out of the rack of itself.

By choosing a large angle such as e.g. above 45°, but preferably about 90° is furthermore obtained that important advantage that the rack can be relatively short because the handlebar of the scooter is turned into a position perpendicular to the longitudinal direction of the rack thereby taken up less space, such that more scooters can be parked in the same rack.

The upper retainer sheet can according to the invention be placed on a level with an area of the steering tube when the front wheel of the at least one scooter is retained in the opening in the lower retainer sheet whereby advantageously is formed a sufficient large distance between the segment of the front wheel and the retainer slot to effectively keeping the scooter in the correct upright position even if being influenced by power from outside.

For effectively securing this upright position can the distance between the edges of each slot in the upper retainer sheet according to the invention be corresponding at least in the main to the thickness of the steering tube.

For easily being able to park a scooter in the correct upright position in the rack the upper retainer sheet can according to the invention be overhanging the lower retainer sheet so that the steering tube is caught by the respective slot before the front wheel is arriving at the lower retainer sheet.

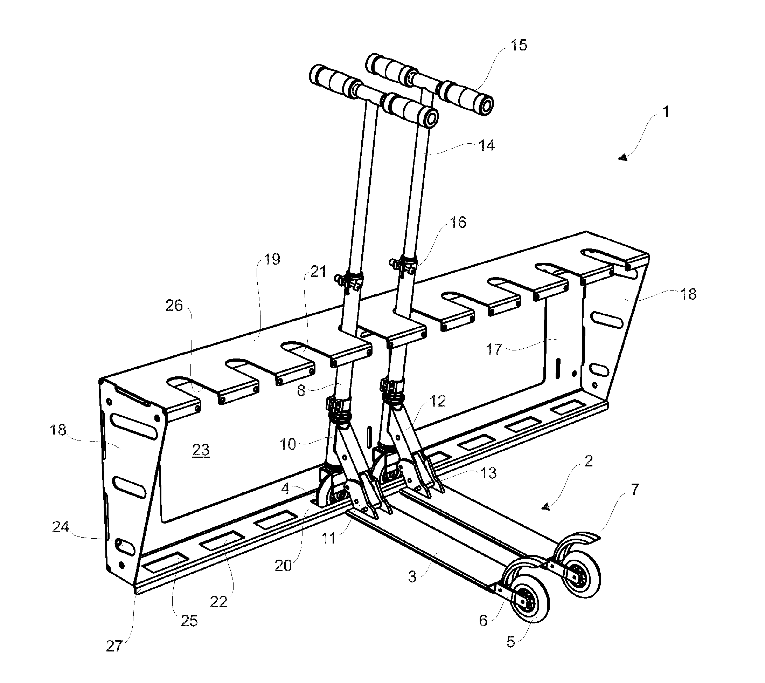

The invention will be explained in greater details below, giving further advantageous features and technical effects and describing an exemplary embodiment of a rack according to the invention with reference to the drawing in which a rack 1 and two push scooters 2 retained in the rack are shown.

Each of the scooters 2 comprises a longitudinal footboard 3 for supporting a rider (not shown) riding the scooter, and moreover a rear wheel 5 and a front wheel 4 of which the rear wheel 5 is connected with the footboard 3 by means of an U-formed bracket 6 and is placed below a rear mudguard 7 attached to the footboard.

The front wheel 4 is connected with a steering tube 8 by means of another U-formed bracket 9 whereby the steering tube 8 is pivotally mounted in an upright head tube 10 connected with the front part of the footboard 3 by means of a connecting member 11 consisting of an upper part 12 and a lower part 13 assembled in such way that the angle between the steering tube 8 and the footboard 3 can be changed if desired.

A handle rod 14 with a handlebar 15 is slideable inserted in the steering tube 8 for allowing the height of the handlebar 15 above the footboard 3 to be adjusted. The handle rod 14 is secured to the steering tube by means of clamps 16 when the handlebar 15 has been placed in the desired position.

The rack 1 is formed as a long frame made of stiff sheets of e.g. iron, metal or plastic and comprises a rear sheet 17, two end sheets 18 and an upper and lower retainer sheet 19, 20 formed with a row of upper and lower retainers 21, 22 for retaining each an upper and lower part, respectively of a push scooter 2 parked in the rack 1.

The rear sheet 17 is formed with an opening 23 and the end sheets 18 with openings 24. Each of the upper retainers 21 is furthermore formed as a retainer slot 21 and each of the lower retainers 22 as a retainer opening 22.

Since the retainer slots 21, the retainer openings 22, the openings 24 in the end sheets 18 and the opening 23 in the rear sheet 17 are formed in sheets they can advantageously and in an inexpensive way be cut out or stamped out of their respective sheets.

The edge 25 surrounding each of the lower retainer openings 22 fits, if convenient with a suitable plus tolerance, to the chord of a circle segment (not shown) of the front wheel 4 of a parked scooter 2 when the front wheel 4 is abutting the floor

(not shown) upon which the rack 1 is placed owing to the fact that the lower retainer sheet 20 and thereby the respective lower retainer opening 22 is placed at a distance above said floor corresponding with the difference between said chord and the periphery of the front wheel 4.

Said distance between the lower retainer sheet 20 and the floor is in this case secured by means of a flap 27 extending downwards from the outer edge of the lower retainer sheet 20.

Each of the lower retainer openings 22 is moreover oriented in such a way in the rack 1 that the axis of the front wheel 4 of a parked scooter 2 preferably forms an angle of about 90° with the longitudinal direction of the rack whereby the scooter effectively is hindered in running out of the rack and the rack furthermore becomes relatively short and inexpensive because the handle bars 15 then likewise forms an angle of about 90° with the longitudinal direction of the rack in which direction they therefore occupy as little space as possible.

The upper retainer sheet 19 is, as can been seen, placed on a level with the steering rod 8 of a scooter 2 parked in the rack 1 and the distance between two opposite edges 26 of a slot 21 formed in the upper retainer sheet 19 corresponds, if convenient with a suitable plus tolerance, to the thickness of the steering rod 8 which thereby easily can be retained in the slot 21.

The outer edge of the upper retainer sheet 19 is, between the mouths of the row of retainer slots 21 debouching into the free, moreover strengthened by means of a row of small pieces of plate 28.

The scooter is, when being parked in the rack 1 of the invention, at first pushed towards one of the retainer slots 21 in the upper retainer sheet 19.

As the upper retainer sheet 19 is overhanging the lower retainer sheet 20 will the steering tube 8 of the scooter advantageously enter the slot 21 in the upper retainer sheet 19 before the front wheel 4 arrives at the lower retainer sheet 20.

At this stage of the parking operation is at least the front part of the scooter lifted up for bringing the front wheel 4 up above the lower retainer sheet 20.

While then turning the front wheel 4 by means of the handlebar 15 an angle of e.g. 90° is the scooter pushed further into the slot 21 until the front wheel 4 is placed above the lower retainer opening 22 after which the front part of the scooter is lowered so the front wheel 4 enters the lower retainer opening 22.

The scooter now secularly is retained in the rack.

When going to be used again can the scooter easily be removed from the rack by only performing the above-mentioned operations in the reversed order.

Above is described and on the drawing shown upper and lower retainer sheets 19,20 upon one side of the rear sheet 17.

Within the scope of the invention can the rack however have upper and lower retainer sheets 19,20 at both sides of the rear sheet 17.

## Claims

1. A rack (1) for releasable retaining at least one push scooter (2) of that kind which comprises a longitudinal footboard (3) disposed between at least one front wheel (4) and at least one rear wheel (5), an upright head tube (10) connected with the footboard (3), and a steering tube (8) pivotally mounted in the head tube (10) and equipped with a handle rod (14) at the top and with the front wheel (4) at the bottom, **characterized in, that** the rack (1) comprises a row of upper and lower retainers (21,22), whereby each of the upper retainers (21) is adapted to retain an upper part of the at least one scooter (2) and each of the lower retainers (22) is adapted to simultaneously retaining a lower part of said scooter (2).

2. A rack (1) according to claim 1, **characterized in, that** each of the upper retainers (21) is adapted to retain at least a part of the head tube (10) or of the steering tube (8) or of the handle rod (14) of the at least one scooter (2) and that each of the lower retainers (22) is adapted to retain the front wheel (4) of said scooter (2).

3. A rack (1) according to claim 1 or 2, **characterized in, that** the rack (1) is formed as a longitudinal frame (1) made of sheets (19,20) comprising an upper sheet (19) and a lower sheet (20).

4. A rack (1) according to claim 3, **characterized in, that** the upper sheet (19) of the frame (1) is used as an upper retainer sheet (19) formed with the row of upper retainers (21) and that the lower sheet (19) of the frame is used as a lower retainer sheet (20) formed with the row of lower retainers (22).

5. A rack (1) according to each of the claims 1 - 4, **characterized in, that** the row of upper retainers (21) is placed vertically above the row of lower retainers (22).

6. A rack (1) according to each of the claims 1 - 5, **characterized in, that** the distance between the middle of each of two neighboring retainers (21,22) in a row of retainers (21,22) is the same as or is larger than the width of the footboard (3) of said scooter (2).

7. A rack (1) according to each of the claims 3 - 6, **characterized in, that** each of the upper retainers (21) is formed as a slot (21) in the upper retainer sheet (19) and that each of the lower retainers (22) is formed as an opening (22) in the lower retainer sheet (20).

8. A rack (1) according to claim 7, **characterized in, that** each of the retainer openings (22) in the lower retainer sheet (20) has such a size that a segment of the front wheel (4) fits into the opening (22).

9. A rack (1) according to claim 7 or 8, **characterized in, that** the rear side and/or the front side of the lower retainer sheet (20) is formed with a vertically oriented flap (27) and that the width of this flap (27) has about the same size as the distance between the chord of said segment and the periphery of the front wheel (4) of said scooter (2).

10. A rack (1) according to claims 7, 8 or 9 **characterized in, that** each of the lower retainer openings (22) is oriented in such way that the axis of the front wheel (4) of the at least one scooter (2) forms an angle with the longitudinal direction of the frame (1) of the rack (1) when the front wheel (4) of said scooter (2) is retained in the opening (22).

11. A rack (1) according to claim 10, **characterized in, that** the angle is about 90°.

12. A rack (1) according to each of the claims 3 - 11, **characterized in, that** the upper retainer sheet (19) is placed on a level with an area of the steering tube (8) of said scooter (2) when the front wheel (4) of said scooter (2) is retained in the opening (22) formed in the lower retainer sheet (20).

13. A rack (1) according to each of the claims 3 - 12, **characterized in, that** the distance between the edges of each slot (21) in the upper retainer sheet (19) corresponds at least in the main to the thickness of the steering tube (8) of said scooter (2).

14. A rack (1) according to each of the claims 3 - 13, **characterized in, that** the upper retainer sheet (19) is overhanging the lower retainer sheet (20).

15. A use of the rack (1) according to any of the claims 1 - 14 for releasable retaining at least one push scooter (2) according to claim 1, **characterized in** performing the following operational steps when placing said push scooter (2) in a retained position in the rack (1) and/or removing said push scooter (2) from the retained position again,
- pushing said scooter (2) towards one of the retainer slots (21) in the upper retainer sheet (19) so that the steering tube (8) enters the slot (21),
- lifting at least the front part of said scooter (2) sufficiently to bring the front wheel (4) free of the lower retainer sheet (20),
- pushing said scooter (2) further into the slot (21) until the front wheel (4) is placed above the retainer opening (22) placed underneath said slot (21) simultaneously with turning the steering tube (8) an angle corresponding to the angle which the retainer opening (22) forms with the longitudinal direction of the frame of the rack,
- lowering said scooter (2),
- optionally performing the above mentioned operations in reverse order and removing said scooter (2) from the rack.
